Europäisches Patentamt

European Patent Office

Office européen des brevets

(19)

(11) Veröffentlichungsnummer: **0 012 461**
**B1**

(12) EUROPÄISCHE PATENTSCHRIFT

(45) Veröffentlichungstag der Patentschrift:
15.06.83

(21) Anmeldenummer: 79200698.3

(22) Anmeldetag: 29.11.79

(51) Int. Cl.³: **C 10 J 3/52,** C 10 J 3/48,
B 01 D 33/06

(54) Kohlevergasungsanlage.

(30) Priorität: 29.11.78 DE 2851533

(43) Veröffentlichungstag der Anmeldung:
25.06.80 Patentblatt 80/13

(45) Bekanntmachung des Hinweises auf die Patenterteilung:
15.06.83 Patentblatt 83/24

(84) Benannte Vertragsstaaten:
BE DE FR GB NL

(56) Entgegenhaltungen:
DE-A-2 044 310
DE-A-2 735 090
DE-A-2 735 565
DE-B-1 096 302
FR-A-656 252
FR-A-2 286 104
FR-A-2 343 803

(73) Patentinhaber: Ruhrkohle Aktiengesellschaft,
Rellinghauser Strasse 1, D-4300 Essen 1 (DE)

(72) Erfinder: Langhoff, Josef, Dr., Kleinbergerhof 10,
D-4220 Dinslaken (DE)
Erfinder: Althoff, Erwin, An der Dorndelle 7,
D-4619 Bergkamen (DE)
Erfinder: Kolodzey, Wolfgang, Koloniestrasse 57,
D-4100 Duisburg (DE)
Erfinder: Gerhardus, Ulrich, Dipl.-Ing., Im Terfreen 4,
D-4200 Oberhausen (DE)

## Kohlevergasungsanlage

Die Erfindung betrifft eine Kohlevergasungsanlage mit einem Wasserbad im Reaktor und/oder in einem nachgeschalteten Abhitzekessel, das brennbare Bestandteile enthaltende Schlacke aufnimmt, die zusammen mit dem Wasser ausgetragen, in einem Trennscheider mit einem Absetzbehälter vom Wasser getrennt und dem Reaktor wieder zugeführt wird.

Die in einer Kohlevergasungsanlage mit dem Wasser anfallende Schlacke beinhaltet ein erhebliches Entsorgungsproblem. Ein Anschluß der Vergasungsanlage an bestehende Abwässersysteme ist aufgrund des erheblichen Schlackenanfalls zur Entsorgung der Vergasungsanlage nicht geeignet.

Mit der DE-A-2 044 310 ist deshalb vorgeschlagen worden, dem Reaktor einen Trennscheider mit einem Absetzbehälter und einem Überlauf nachzuschalten. Der bekannte Trennscheider ermöglicht den Abzug geklärten Wassers, ferner die Trennung unverbrannter Kohlenstoffpartikel von übrigen Schlackenbestandteilen. Das geklärte Wasser wird dem Reaktor zurückgeführt. Die unverbrannten Kohlebestandteile lassen sich in einer Kohlewassersuspension dem Eintrag des Reaktors wieder zufügen. Die übrigen Schlackenbestandteile werden in einer Wassersuspension abgeführt.

Der Absetzbehälter bedingt eine besondere Dosierung der aus dem Reaktor bzw. dem nachgeschalteten Abhitzekessel austretenden Schlackenpartikel, unverbrannten Kohlenstaubpartikeln und des Wassers. Störungen im Absetzbetrieb haben infolge Verstopfens eine Störung des Reaktorbetriebes zur Folge.

Der Erfindung liegt daher die Aufgabe zugrunde, Folgewirkungen aus Betriebsstörungen des Schlackenabzuges auf den Reaktorbetrieb weitgehend zu verhindern. Nach der Erfindung wird das dadurch erreicht, daß der Trennscheider ein Trommelsieb enthält. Das Trommelsieb stellt eine im wesentlichen wartungsfreie Konstruktion dar, die weitgehend unabhängig von der Geschwindigkeit der anströmenden Schlacke, Wassers und der anströmenden unverbrannten Kohlestaubpartikel ist.

Das Trommelsieb kann in verschiedener Weise genutzt werden. Es eröffnet die Möglichkeit, das Wasser in den Trommelinnenraum zu lenken. Das Wasser läuft dann durch die Trommel nach außen ab, wobei das Ablaufen durch die auf das Wasser mit der Trommeldrehbewegung wirkende Zentrifugalkraft beschleunigt wird und ein besonders hoher Trocknungsgrad erreicht wird. Eine geneigte Anordnung der Trommel gewährleistet zugleich einen Partikelfluß von einem zum anderen Ende der Trommel. Die Drehung des Trommelsiebes und der erreichbare Trocknungsgrad sind durch die notwendige Partikelbewegung in axialer Trommelrichtung begrenzt. Das Trommelsieb darf sich nicht so schnell drehen, daß die Partikel infolge der auf sie wirkenden Zentrifugalkraft in der Trommel verbleiben.

Eine andere Nutzung des Trommelsiebes sieht eine Beaufschlagung von außen vor. Das Schlackenpartikel führende Wasser wird auf die Oberseite der Trommel aufgegeben. Das Wasser dringt dann durch das Trommelsieb in den Trommelinnenraum und fließt nach unten ab, während die Schlackenpartikel auf dem Umfang des Trommelsiebes weitergefördert und mittels eines Abstreifbleches kontinuierlich von dem Trommelsieb entfernt werden. Bei geeigneter Neigung des Abstreifbleches gelangen die Schlackenpartikel dann von dem als Rutsche wirkenden Abstreifblech in einen Sammelbehälter. Vorzugsweise erstreckt sich das Abstreifblech parallel zur Trommellängsachse entlang des Trommelsiebes. In gleicher Weise kann die Wasserzuführung ausgebildet sein. Das heißt, die Wasserzuführung kann aus einem sich wie das Abstreifblech am Trommelsieb entlang erstreckenden Aufgabeblech bestehen. Besonders günstige Betriebsverhältnisse ergeben sich, wenn die beiden Bleche sich am Trommelsieb beiderseits der durch die Trommelmitte gehenden Vertikalen gegenüberliegen und in bezug auf die Trommelmitte und die Berührungspunkte am Trommelsieb einen Winkel zwischen sich einschließen, der nicht größer als 90° ist. Dann nimmt die Trommel die angeförderten Schlackenpartikel sehr leicht auf und trägt sie weiter zum Abstreifblech, während ausreichend Gelegenheit zum Abfließen für das Wasser besteht.

In weiterer Ausbildung der Erfindung sind mehrere der erfindungsgemäßen Trommelsiebe hintereinander angeordnet. Dadurch kann eine Klassierung der Schlacke erreicht werden. Mit einer Parallelschaltung verschiedener Trommelsiebe kann dagegen bei gleichbleibender Behältergröße einem vielfach größeren Wasserund Schlackenanfall Rechnung getragen werden.

Die Klassierung der anfallenden Schlackenpartikel ist für eine Schlackenrückführung in den Reaktor von besonderem Vorteil. Sie erlaubt eine genaue Einstellung der gewünschten Schlackenkörnung.

Für diese Rückführung besitzt jedes Trommelsieb eine unmittelbar zum Reaktor führende Leitung. Dadurch sind die nachgeschalteten Siebe jeweils mit der zum Reaktor führenden Leitung parallel geschaltet. Als Leitungen eignen sich einfache Rohrleitungen. Die Partikelströmung wird mit Hilfe einer vorzugsweise als Kolben- oder Membranpumpe ausgebildeten Pumpe gesteuert. Desgleichen kann die Steuerung des Partikelstromes mit in einzelnen oder allen Leitungen angeordneten Steuerventile erfolgen.

Als Steuerventile eignen sich einfache Rohrschieber.

Die Klassierung der anfallenden Schlackenpartikel in den verschiedenen Trommelsieben wird durch unterschiedliche Sieböffnungen bestimmt. Der Verdrängungsgewichtsunterschied der Schlackenpartikel beträgt in zwei unmittelbar hintereinander geschalteten Behältern mindestens 0,5 g/cm³. Die Wassergeschwindigkeit beträgt mindestens 2 m/sec.

In der Zeichnung sind verschiedene Ausführungsbeispiele der Erfindung dargestellt. Es zeigen

Fig. 1 und 2 Absetzbehälter eines erfindungsgemäßen Trennscheiders,

Fig. 3 und 4 einen weiteren Absetzbehälter,

Fig. 5 und 6 ein nachgeschaltetes Trommelsieb des erfindungsgemäßen Trennscheiders,

Fig. 7 eine Hintereinanderschaltung verschiedener Behälter nach Fig. 1–6 mit der Möglichkeit zur Schlackenrückführung zum Reaktor.

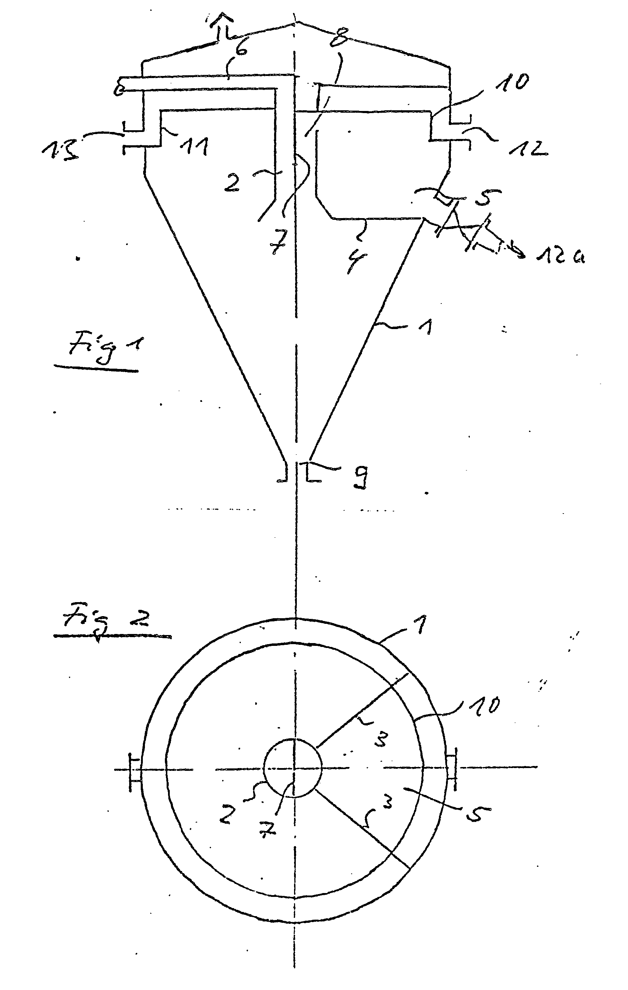

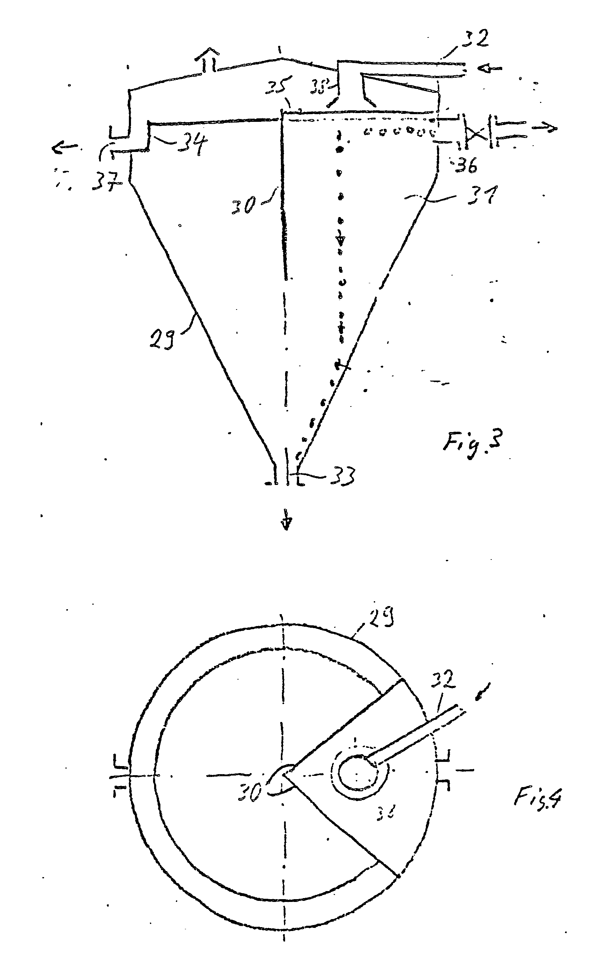

In Fig. 1 und 2 ist mit 1 ein Absetzbehälter bezeichnet. Der Absetzbehälter 1 steht aufrecht mit seinem spitzen Ende nach unten; beide Enden sind offen. Am oberen Ende des Absetzbehälters 1 ist zentrisch in dem Absetzbehälter 1 eine Zuführungsleitung 2 angeordnet. Die Zuführungsleitung 2 wird durch Seitenwangen 3 in dem Absetzbehälter 1 gehalten, die in radialer Richtung des Absetzbehälters 1 schließend über der ganzen Länge an der Zuführungsleitung 2 und an der gegenüberliegenden Behälterinnenwand anliegen. Zweckmäßigerweise sind die Seitenwangen 3 an der Behälterinnenwand und Zuführungsleitung 2 verschweißt. Unten an den Seitenwangen 3 befindet sich ein Boden 4. Der Boden 4 schließt dicht mit den Seitenwangen 3, der Zuführungsleitung 2 und der Behälterinnenwand ab. Er ist vorzugsweise mit diesen Teilen verschweißt. Der Boden 4 bildet mit den Seitenwangen 3, der von den Seitenwangen 3 und dem Boden 4 eingeschlossenen Rohrwandung sowie der eingeschlossenen Zuführungsleitung 2 einen Auffangbehälter 5.

Zu der Zuführungsleitung 2 führt eine Zuführungsleitung 6 für mit Schlacke beladenes Wasser. Dieses Wasser stammt aus dem Wasserbad eines einem Vergasungsreaktor einer Kohlevergasungsanlage unmittelbar nachgeschalteten Strahlungskessels.

Dabei besitzen der Vergasungsreaktor und der Strahlungskessel im wesentlichen zylindrische Formen und sind fluchtend übereinander angeordnet, so daß die aus dem Reaktor austretenden Schlackenpartikel senkrecht nach unten in den Strahlungskessel strömen können und dort eine erste Abkühlung erfahren. Im Fuß des Strahlungskessels befindet sich das Wasserbad.

Das bei einer Kohlevergasung entstandene Gas und die von dem Gas mitgeführten Schlackenpartikel strömen gegen den Badspiegel des Wasserbades. Dabei wird das Gas an dem Badspiegel des Wasserbades umgelenkt, während die mitgeführten Schlackenpartikel infolge ihrer Massenträgheit in das Wasserbad schlagen und sich dort sammeln.

Die Schlackenpartikel werden mit dem Wasser am unteren Ende des Strahlungskessels abgezogen. Das geschieht bei einer Kohlevergasung unter Überdruck mit Hilfe einer Schleuse. Das heißt, zunächst wird das untere Ende des Strahlungskessels, an das sich das obere Ende der Schleuse anschließt, geöffnet. Dadurch kann die Schlacke aus dem unteren Ende des Strahlungskessels in die Schleuse abfließen. Nach Entleerung der Schlackenpartikel aus dem Wasserbad wird dessen Ende bzw. das obere Ende der Schleuse wieder geschlossen. Es wird nur soviel Wasser ausgeschleust, wie es einer Schleusenfüllung entspricht. Das restliche Wasser des Wasserbades dient aus Sicherheitsgründen als Gassperre. Anschließend können das untere Ende der Schleuse geöffnet und die Schlacke mitsamt dem Wasser aus der Schleuse bei atmosphärischem bzw. geringfügigem Überdruck abgezogen werden.

Die Schleuse erfüllt einen doppelten Zweck. Sie ist Druckschleuse. Als Druckschleuse ermöglicht sie es, die Schlacke aus der Überdruckatmosphäre des Reaktor- und Strahlungskesselinnenraumes abzuziehen. Zugleich schützt sie das erzeugte Gas vor unerwünschten Beimengungen umgebender Atmosphäre bzw. die Umwelt vor nachteiligen Folgen ausströmenden Synthesegases.

Das Schlacke führende Wasser aus dem Wasserbad des Strahlungskessels wird mit einer beispielsweise als Flügelrad oder Kolbenpumpe ausgebildeten Förderpumpe durch die Zuführungsleitungen 6, 2 des Absetzbehälters gedrückt.

Die Zuführungsleitung 2 besitzt eine Trennwand 7. Die Trennwand 7 unterteilt den Rohrinnenraum in zwei Hälften und endet in der Mitte der Zuführungsleitung 2, d. h., erstreckt sich über die halbe Länge der Zuführungsleitung 2.

Die aus der Zuführungsleitung 6 austretenden und infolge des Pumpendruckes zwangsweise nach unten in die Zuführungsleitung 2 strömenden Schlackenpartikel haben unterschiedliches Verdrängungsgewicht. Die einen Partikel besitzen infolge eines gegenüber dem Wasser geringeren Verdrängungsgewichtes Schwimmfähigkeit. Auf diese Partikel wirkt ständig eine Auftriebskraft. Diese Auftriebskraft wird in der Zuführungsleitung 6 durch den Pumpendruck überwunden. Am Ende der Trennwand 7 wird diesen Schlackenpartikeln Gelegenheit gegeben, aus der Zuführungsströmung auszubrechen und in dem gegenüberliegenden und mit 8 bezeichneten Abfluß wieder aufzusteigen. Die schwimmfähigen Schlackenpartikel gelangen dann aus dem Abfluß 8 in den Auffangbehälter 5.

Die Schlackenpartikel mit dem gegenüber dem Wasser größeren Verdrängungsgewicht treten aus der Zuführungsleitung 2 nach unten aus und setzen ihre Bewegungsbahn zum unteren Ende des Absetzbehälters 1 hin fort. Am unteren Ende 9 des Absetzbehälters 1 sammeln sich diese Schlackenpartikel. Sie können dort kontinuierlich oder in Intervallen abgezogen werden. Das durch die Zuführungsleitung 6 zugeführte Wasser strömt über jeweils einen Überlauf 10 im Auffangbehälter 5 und einen Überlauf 11 im übrigen Behälterbereich in einen Abfluß und einen Klarwasserabfluß 13. Das durch den Klarwasserabfluß 13 ausströmende Wasser ist durch Sammeln der Schlackenpartikel am unteren Ende 9 des Absetzbehälters 1 gereinigt. Das aus dem Abfluß 12 austretende Wasser wird durch den Überlauf 10 von den schwimmfähigen Schlackenpartikeln gereinigt. Der Überlauf 10 hält die Schlackenpartikel zurück.

Der Überlauf 10 und der Überlauf 11 werden durch einen gemeinsamen Ring im Absetzbehälter 1 gebildet, der durch die Seitenwangen 3 unterteilt ist.

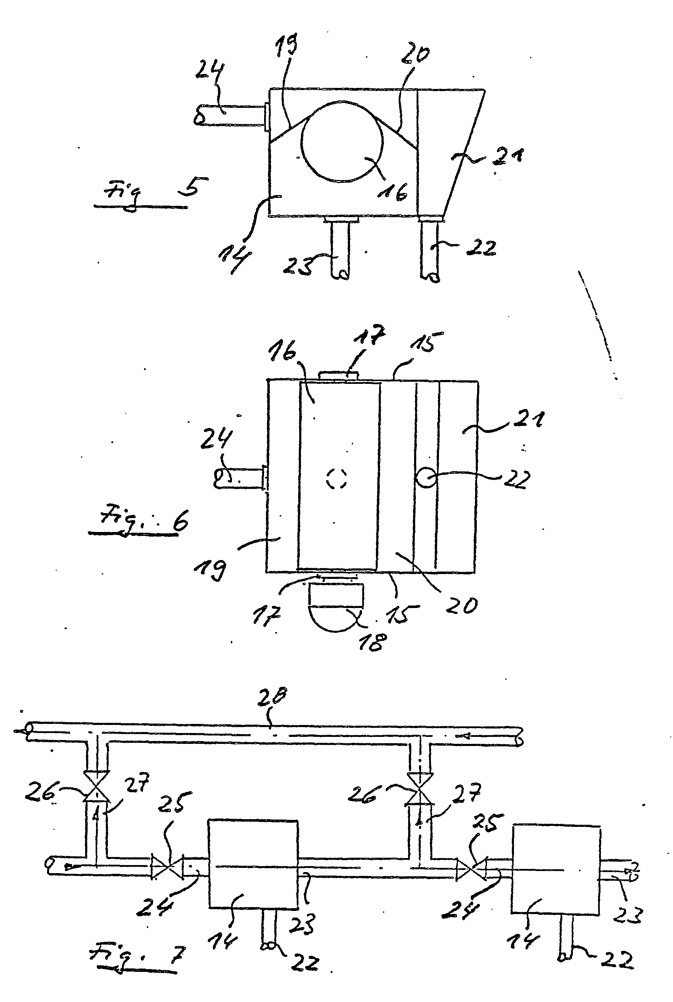

Der Abfluß 12 und die Leitung 12a sind mit einem Trommelsieb nach Fig. 5 und 6 verbunden.

Nach Fig. 3 und 4 ist anstelle des Absetzbehälters 1 ein Absetzbehälter 29 vorgesehen. Der Absetzbehälter 29 steht aufrecht mit seinem spitzen Ende nach unten. Beide Enden sind offen. Am oberen Ende des Absetzbehälters 29 ist exzentrisch in dem Absetzbehälter eine Zuführungsleitung 38 angeordnet. Die Zuführungsleitung 38 befindet sich mittig in einer nach unten offenen Trennzone 31. Die Trennzone 31 wird durch die Seitenwangen 30 gebildet, die mit der Behälterwand und am Stoß miteinander verschweißt sind.

Zu der Zuführungsleitung 38 führt eine Zuführungsleitung 32 für mit Schlacke beladenes Wasser. Das Schlacke führende Wasser wird mit einer beispielsweise als Flügelrad oder Kolbenpumpe ausgebildeten Förderpumpe durch die Zuführungsleitung 32 in die Zuführungsleitung 38 des Absetzbehälters 29 gedrückt.

Das aus der Zuführungsleitung 32 austretende Schlackenwasser wird über die Zuführungsleitung 38 entspannt und auf die Wasseroberfläche der Trennzone 31 gegeben. Die einen Partikel besitzen infolge eines gegenüber dem Wasser geringeren Verdrängungsgewichtes Schwimmfähigkeit. Auf diese Partikel wirkt ständig eine Auftriebskraft. Diese Auftriebskraft bewirkt, daß diese Partikel an der Oberfläche bleiben. Ein Übertreten dieser Partikel in den Klarwasserabfluß 37 wird durch die höher als der Klarwasserbadspiegel und Überlauf 34 liegenden Kanten 35 der Seitenwangen 30 verhindert.

Die Schlackenpartikel mit dem gegenüber dem Wasser größeren Verdrängungsgewicht treten aus der Zuführungsleitung 38 nach unten aus und setzen ihre Bewegungsbahn durch die Trennzone 31 zum unteren Ende des Absetzbehälters 29 hin fort. Am unteren Ende 33 des Absetzbehälters 29 sammeln sich diese Schlackenpartikel. Sie können dort kontinuierlich oder in Intervallen abgezogen werden. Das durch die Zuführungsleitung 32 zugeführte Wasser strömt über den Überlauf 34.

Das durch den Klarwasserabfluß 37 ausströmende Wasser ist durch Sammeln der Schlackenpartikel am unteren Ende 33 des Abflußbehälters 29 und das Sammeln der schwimmfähigen Schlackenpartikel in der Trennzone 31 gereinigt. Am Abfluß 36 können kontinuierlich oder in Intervallen die schwimmfähigen Partikel ausgetragen werden. Wahlweise wird außerdem ein mechanisch angetriebener Rechen an der Trennzone 31 angeordnet, der die schwimmfähigen Schlackenpartikel zusätzlich abzieht.

Fig. 5 und 6 zeigen ein nachgeschaltetes Trommelsieb. Die Vorrichtung nach Fig. 1 und 2 besteht aus einem kastenförmig ausgebildeten Auffangbehälter 14, in dessen Seitenwänden 15 ein Trommelsieb 16 drehbeweglich gelagert ist. Das Trommelsieb 16 ist beiderseits in Lagerflanschen 17 gehalten und an einer Seite mit einem Antriebsmotor 18 versehen. Der Antriebsmotor 18 dreht das Trommelsieb 16 kontinuierlich mit gleichbleibender Geschwindigkeit. Dabei gleitet das Trommelsieb 16 an zwei Blechen, von denen eines die Funktion eines Aufgabebleches 19 hat, während das andere eine Rutsche 20 bildet. Die Rutsche 20 führt zu einem Sammelbehälter 21, an dessen Unterseite sich eine Leitung 22 zum Abziehen von gesammelten Schlackenpartikeln befindet. An der Unterseite des Auffangbehälters 14 befindet sich gleichfalls eine Leitung. Diese mit 23 bezeichnete Leitung dient zum Abziehen von Wasser. Ferner besitzt der Auffangbehälter 14 eine Wasser- und Schlackenzuführungsleitung 24.

Im Betriebsfall wird Schlacke führendes Wasser durch die Zuführungsleitung 24 mit Hilfe einer Pumpe in den Auffangbehälter 14 gefördert. Dabei gelangt das Wasser mit den Schlackenpartikeln über das Aufgabeblech 19 auf den äußeren Umfang des sich im Uhrzeigersinn mit geringerer Geschwindigkeit drehenden Trommelsiebes 16.

Das Trommelsieb 16 fördert die Schlackenpartikel von dem Aufgabeblech 19 zur Rutsche 20, während das Wasser durch das Trommelsieb 16 hindurch zum Behälterboden strömt. Dort wird es durch die Leitung 23 hindurch abgezogen.

Die an der Rutsche 20 ankommenden Schlackenpartikel werden von dem Trommelsieb 16 abgestreift und gleiten auf der Rutsche 20 in den Sammelbehälter 21. Dort sammeln sie sich und können kontinuierlich oder in Zeitabschnitten durch die Leitung 22 hindurch einer beliebigen Verwendung zugeführt werden.

Damit die angeförderten Schlackenpartikel von dem Trommelsieb 16 abgestreift werden, gleitet die Rutsche 20 auf dem Trommelsieb 16 bzw. ist sie mit geringfügigem Spiel über dem Trommelsieb 16 angeordnet. Entsprechendes gilt für das Aufgabeblech 19, um ein unerwünschtes Hindurchtreten von Schlackenpartikeln zum Behälterboden zu verhindern.

Die Drehgeschwindigkeit und die Fördergeschwindigkeit für das Wasser und die Schlackenpartikel sind so abgestimmt, daß der aufgabeseitige Wasserspiegel unterhalb der durch das Trommelsieb 16 gegebenen oberen Begrenzung steht.

Um eine möglichst weitgehende Trocknung der Schlackenpartikel während des Trennvorganges zu erreichen, wird wahlweise die Rutsche 20 mit Sieböffnungen versehen, die ein zusätzliches Ablaufen von sich auf der Rutsche sammelnden Flüssigkeitstropfen ermöglichen.

Im übrigen kann die Beaufschlagung des Trommelsiebes mit Schlacke führendem Wasser statt von außen auch von innen erfolgen. In einem solchen Fall ist das Trommelsieb 16 als Hohlzylinder ausgebildet und wird das Schlacke führende Wasser durch eine koaxial angeordnete Zuführungsleitung in das Innere des Trommelsiebes gelenkt. Dort tritt das Wasser durch das Trommelsieb hindurch in den umgebenden Behälter. Die Drehung des Trommelsiebes wirkt dabei beschleunigend auf die Trennung von Wasser und Schlackenpartikeln. Das austretende Wasser wird gegen die Wände des dann zweckmäßigerweise allseitig geschlossenen Sammelbehälters 14 geschleudert und strömt von den Wänden zum Behälterboden, wo es durch die Leitung 23 abgezogen wird.

Der Trennungsvorgang im Trommelsieb erfolgt kontinuierlich, d. h., es tritt kontinuierlich die vom Wasser weitgehend befreite Schlacke aus dem anderen Ende des Trommelsiebes aus, wenn der Auffangbehälter 14 mit dem Trommelsieb 16 geneigt angeordnet ist und statt des in Fig. 1 vorgesehenen, auf gleicher Welle sitzenden Antriebsmotors ein davon versetzt angeordneter Antriebsmotor über eine geeignete Transmission, z. B. einen Riemen oder Zahnradtrieb, das Trommelsieb 16 treibt. Der Riemen- oder Zahnradtrieb ermöglicht eine Trommelsieblagerung am äußeren Trommelsiebumfang mit einem außerhalb des Auffangbehälters 14 angeordneten Antriebsrad, das mit einer dem Innendurchmesser des Trommelsiebes gleichen Öffnung versehen ist. Dadurch können die Schlackenpartikel auf einer glatten Fläche ohne Hindernisse aus dem Trommelsieb 16 durch das Antriebsrad hindurch austreten. Die Zuführung des Schlacke führenden Wassers kann durch eine koaxiale Bohrung in der zum Lagerflansch 17 gehörenden Achse erfolgen.

Die Drehgeschwindigkeit des Trommelsiebes 16 ist bei Beaufschlagung des Trommelsiebes 16 von innen durch die auf die Schlackenpartikel wirkende Zentrifugalkraft und die Neigung des Trommelsiebes 16 bzw. des Auffangbehälters 14 begrenzt.

Im Falle der Beaufschlagung des Trommelsiebes 16 von außen sammeln sich alle Schlackenpartikel in dem Sammelbehälter 21. Die Schlackenpartikel sammeln sich dagegen in einem dem Trommelsieb in aixaler Richtung nachgeordneten Sammelbehälter, wenn die Schlackenpartikel axial durch das Trommelsieb hindurchgeführt werden.

Die Nachschaltung des Sammelbehälters 14 hinter dem Absetzbehälter 1 bzw. 29 bewirkt eine Klassierung. Dazu ist die Zuführungsleitung 24 mit dem Abfluß 8 verbunden und sammeln sich Schlackenpartikel mit größerem Verdrängungsgewicht im Absetzbehälter 1, während sich Schlackenpartikel mit kleinerem Verdrängungsgewicht im Sammelbehälter 21 sammeln. Eine weitere Klassierung des Schlackengutes läßt sich mit Hilfe einer Änderung der Strömungsgeschwindigkeit des Wassers und/oder der Sieböffnungen des Trommelsiebes bzw. der Rutsche 20 erreichen. Die Vergrößerung der Wassergeschwindigkeit führt zu einem Mitreißen kleinerer Schlackenpartikel über den Überlauf 10. Diese Schlackenpartikel sammeln sich bei Hintereinanderschaltung mehrerer Sammel- und Trennvorrichtungen in einem nachgeschalteten Sammelbzw. Trennbehälter. Das heißt, das Prinzip dieser fortschreitenden Klassierung beruht auf mangelnder Funktionsfähigkeit der vorgeschalteten Trenn- und Sammelvorrichtungen. Die zu hohe Wassergeschwindigkeit verursacht die für diesen Vorgang nachlassende Sammel- und Trennfähigkeit der Vorrichtungen.

Unabhängig von der Wassergeschwindigkeit kann eine Klassierung mit unterschiedlichen Sieböffnungen bewirkt werden. Durch zunächst sehr große Sieböffnungen wird den kleinen Schlackenpartikeln Gelegenheit gegeben, mit dem Wasser durch das Trommelsieb 16 bzw. die Rutsche 20 hindurchzuströmen. Eine vorgeschaltete Sammel- und Trennvorrichtung spricht dann nur auf die größeren Partikel an. Die mit dem abgeschiedenen Wasser mitgeführten kleineren Schlackenpartikel können dann in einer oder mehreren nachgeschalteten weiteren Sammel- und Trennvorrichtungen abgeschieden werden. Durch Abstufen der Sieböffnungen von Vorrichtung zu Vorrichtung fallen die Schlackenpartikel nach Größen sortiert an.

Fig. 3 zeigt eine Hintereinanderschaltung verschiedener Trenn- und Sammelvorrichtungen. Das dargestellte Schema ist nachfolgend anhand der Auffangbehälter 14 erläutert. Danach befindet sich in jeder Zuführungsleitung 24 ein als Rohrschieber ausgebildetes Steuerventil 25.

Jeder Auffangbehälter 14 ist mit seiner Zuführungsleitung 24 an die Leitung 23 des vorgeschalteten Auffangbehälters 14 angeschlossen. Von den Leitungen 23, 24 führt eine Leitung 27 mit zwischengeschalteten Steuerventilen 26 zu einer Leitung 28. Mit Hilfe der Steuerventile 25 wird der Eingang der Auffangbehälter 14 geregelt. Je nach Ventilstellung tritt mehr oder weniger Schlacke führendes Wasser in die Auffangbehälter 14 ein. Das von jedem Steuerventil am Eintritt in den Auffangbehälter 14 gehinderte Wasser strömt mit den Schlackenpartikeln über die zugehörige Leitung 27 und das Steuerventil 26 in die Leitung 28. Andererseits kann der Flüssigkeitsstrom in den Leitungen 27 auch durch Verstellen der Steuerventile 26 beeinflußt werden.

Bei unterschiedlichen Sieböffnungsgrößen in jedem Auffangbehälter 14, also zunächst größeren Sieböffnungen und von Behälter zu Behälter kleiner werdenden Sieböffnungen, fällt hinter jedem Auffangbehälter 14 Wasser mit anderen, verbleibenden kleineren Schlackenpartikeln an. Dieses Wasser und diese Schlackenpartikel können durch Verstellen des Steuerventils 25 ganz oder teilweise in die vor dem zugehörenden Steuerventil 25 abzweigende Leitung 27 hindurch in die Leitung 28 geleitet werden.

Der bei teilweisem Abzweigen des Wasser- und Partikelstromes verbleibende, in den nachfolgenden Auffangbehälter 14 gelangende Wasser- und Partikelstrom wird wiederum von Schlackenpartikeln bestimmter Größe befreit, nämlich denen, die an den Sieböffnungen dieses nachgeschalteten Auffangbehälters 14 hängenbleiben. Die mit dem durchströmenden Wasser mitgehenden Schlackenpartikel kleineren Formats treten durch die Leitungen 23 aus und können wiederum ganz oder teilweise der Leitung 28 zugeführt werden. Das geschieht mit Hilfe des dem nächsten Auffangbehälter 14 vorgeschalteten Steuerventils 25.

Die in allen Auffangbehältern 14 herausgesiebten Partikel werden durch die Leitungen 22 abgeführt. Sie gehen einer beliebigen Verwendung zu.

Die mit Wasser in die Leitung 28 gelangten Schlackenpartikel besitzen eine Korngrößenverteilung, die mit den Steuerventilen 25 und 26 so eingestellt ist, daß sie sich bei einer Schlackenrückführung aus der Leitung 28 in die Kohleaufgabe (Reaktoreintrag), insbesondere den dem Vergasungsreaktor vorgeschalteten Mischer für die Kohleaufbereitung, mit der Einsatzkohle optimal ergänzen. Die optimale Einstellung läßt sich von Hand durch probeweise Verstellung der Steuerventile 25 ermitteln.

Die Schlackenpartikel werden zusammen mit dem Wasser in den Mischer gegeben, wenn die Einsatzkohle in die Form einer pumpfähigen Kohle-Wasserslurry gebracht werden soll. Dabei läßt sich der Wasseranteil aus der Leitung 28 durch Zwischenschaltung eines weiteren Trennscheiders in beliebiger Weise verrringern. Das geschieht entweder mit entsprechend verringerter Wasserabscheidefähigkeit oder aber durch teilweise Zugabe des abgeschiedenen Wassers nach Verlassen des Abscheidebehälters.

Vorzugsweise beschränkt sich die Rückführung von Schlackenpartikel zum Reaktor auf die schwimmfähigen Schlackenpartikel. Die schwimmfähigen Schlackenpartikel besitzen infolge unvollständigen Ausbrandes noch einen nutzbaren Kohlenstoffanteil.

Sofern zur Beeinflussung der Reaktortemperatur auch eine Beimengung von völlig ausgebrannten Schlackenpartikeln von Vorteil ist, ist eine zusätzliche Partikelzuführung in die Leitung 28 vorgesehen. Die zusätzliche Zuführung erfolgt über ein geeignetes Förderaggregat, z. B. eine Förderschnecke.

| 1 | Absetzbehälter |
| 2 | Zuführungsleitung |
| 3 | Seitenwange |
| 4 | Boden |
| 5 | Auffangbehälter |
| 6 | Zuführungsleitung |
| 7 | Trennwand |
| 8 | Abfluß |
| 9 | Ende |
| 10 | Überlauf |
| 11 | Überlauf |
| 12 | Abfluß |
| 13 | Klarwasserabfluß |
| 14 | Auffangbehälter |
| 15 | Seitenwände |
| 16 | Trommelsieb |
| 17 | Lagerflansch |
| 18 | Antriebsmotor |
| 19 | Aufgabeblech |
| 20 | Rutsche |
| 21 | Sammelbehälter |
| 22 | Leitung |
| 23 | Leitung |
| 24 | Zuführungsleitung |
| 25 | Steuerventil |
| 26 | Steuerventil |
| 27 | Leitung |
| 28 | Leitung |
| 29 | Absetzbehälter |
| 30 | Seitenwangen |
| 31 | Trennzone |
| 32 | Zuführungsleitung |
| 33 | Ende |
| 34 | Überlauf |
| 35 | Kanten |
| 36 | Abfluß |
| 37 | Klarwasserabfluß |
| 38 | Zuführungsleitung |

## Patentansprüche

1. Kohlevergasungsanlage mit einem Wasserbad im Reaktor und/oder in einem nachgeschalteten Abhitzekessel, das brennbare Bestandteile enthaltende Schlacke aufnimmt, die zusammen mit dem Wasser ausgetragen, in einem Trennscheider mit einem Absetzbehälter vom Wasser getrennt und dem Reaktor wieder zugeführt wird, dadurch gekennzeichnet, daß der Trennscheider ein Trommelsieb (16) enthält.

2. Kohlevergasungsanlage nach Anspruch 1, dadurch gekennzeichnet, daß das Trommelsieb (16) drehbeweglich ausgebildet und horizontal angeordnet ist und mit einem Aufgabeblech (19) für eine Beaufschlagung der Außenseite des Trommelsiebes (16) mit Schlacke führendem Wasser versehen ist und eine Rutsche (20) für den Siebrückstand aufweist, die zu einem Sammelbehälter (21) führt.

3. Kohlevergasungsanlage nach Anspruch 1, gekennzeichnet durch eine geneigte Anordnung des Trommelsiebes (16) und eine axiale Zuführung des Schlacke führenden Wassers sowie eine axiale Abführung der Schlackenpartikel sowie einen Auffangbehälter (14) für das in radialer Richtung aus dem Trommelsieb (16) austretende Wasser.

4. Kohlevergasungsanlage nach einem oder mehreren der Ansprüche 1 bis 3, gekennzeichnet durch mehrere hintereinander angeordnete Auffangbehälter (14).

5. Kohlevergasungsanlage nach Anspruch 4, dadurch gekennzeichnet, daß jeder nachgeordnete Auffangbehälter (14) eine unmittelbar zum Reaktor führende Leitung (27, 28) aufweist.

6. Kohlevergasungsanlage nach Anspruch 5, gekennzeichnet durch Steuerventile (25, 26) in den Leitungen (27, 28).

7. Kohlevergasungsanlage nach Anspruch 1, dadurch gekennzeichnet, daß der Absetzbehälter (1, 29) eine Zuführungsleitung (2, 32, 38) einen Klarwasserabfluß (13, 37) und einen Abfluß (8, 12, 36) für schwimmfähige Stoffe enthaltendes Wasser enthält, wobei beide Abflüsse (8, 12, 13, 36, 37) durch eine in das Wasser ragende Wand aus Seitenwangen (3, 30) und Boden (4) voneinander getrennt sind.

8. Kohlevergasungsanlage nach Anspruch 7, dadurch gekennzeichnet, daß der Klarwasserabfluß (13, 37) als Überlauf ausgebildet ist.

9. Kohlevergasungsanlage nach Anspruch 1, dadurch gekennzeichnet, daß der Absetzbehälter eine unterhalb des Wasserspiegels mündende Zuführungsleitung (2, 32, 38) enthält.

10. Kohlevergasungsanlage nach Anspruch 1, dadurch gekennzeichnet, daß der durch die Seitenwangen (30) gebildete Raum, an dem der Abfluß (36) angeordnet ist, nach unten zum Austragen der nicht schwimmfähigen Partikel offen ist und daß der Abfluß (36) am Badspiegel zum freien Austritt der schwimmfähigen Stoffe eine Öffnung besitzt.

### Claims

1. Coal gasification plant with a water bath in the reactor, and/or in a subsequent waste heat boiler, which receives slag containing combustible components, which are discharged together with the water, are separated from water in a separator with a settling vessel, and are delivered back again to the reactor, characterised in that the separator contains a drum screen (16).

2. Coal gasification plant according to claim 1, characterised in that the drum screen (16) is constructed in a rotatable manner and arranged horizontally, and is provided with a feed plate (19) for subjecting the exterior of the drum screen (16) to water carrying slag, and has a chute (20) for the material retained on the screen, which leads to a collecting vessel (21).

3. Coal gasification plant according to claim 1, characterised by an inclined arrangement of the drum screen (16) and an axial supply of the water carrying slag, and also an axial outlet for the slag particles, and also a receiving container (14) for the water emerging in a radial direction from the drum screen (16).

4. Coal gasification plant according to one or more of claims 1 to 3, characterised by a plurality of receiving containers (14) arranged in succession.

5. Coal gasification plant according to claim 4, characterised in that each successive receiving container (14) has a conduit (27, 28) leading directly to the reactor.

6. Coal gasification plant according to claim 5, characterised by control valves (25, 26) in the conduits (27, 28).

7. Coal gasification plant according to claim 1, characterised in that the settling vessel (1, 29) includes a supply conduit (2, 32, 38) a discharge (13, 37) for clear water and an input (8, 12, 36) for water containing buoyant materials, while both discharges (8, 12, 13, 36, 37) are separated from one another by a wall extending into the water consisting of side cheeks (3, 30) and a bottom (4).

8. Coal gasification plant according to claim 7, characterised in that the clear water discharge (13, 37) is formed as an overflow.

9. Coal gasification plant according to claim 1, characterised in that the settling vessel includes a supply conduit (2, 32, 38) opening below the water level.

10. Coal gasification plant according to claim 1, characterised in that the space defined by the side cheeks (30), with which the discharge (36) is associated, is open downwards for discharge of the non-buoyant particles, and that the discharge (36) at the bath level has an opening for free outflow of the vuoyant materials.

### Revendications

1. Installation de gazéification de charbon comportant un bain d'eau dans le réacteur et/ou dans une chaudière de récupération placée en aval, qui reçoit de la scorie contenant des éléments combustibles qui est extraite avec l'eau, séparée de l'eau dans un séparateur comportant un récipient de décantation et renvoyée au réacteur, caractérisée en ce que le séparateur comprend un tambour cribleur (16).

2. Installation de gazéification de charbon selon la revendication 1, caractérisée en ce que le tambour cribleur (16) est tournant et placé horizontalement, et est pourvu d'une plaque d'alimentation (19) pour l'arrivée de l'eau chargée de scorie sur le côté extérieur du tambour cribleur (16) et présente pour les refus de criblage un plan incliné (20) qui conduit à un récipient collecteur (21).

3. Installation de gazéification de charbon selon la revendication 1, caractérisée par une position inclinée du tambour cribleur (16), une amenée axiale de l'eau chargée de scorie, une évacuation axiale des particules de scorie et un récipient récepteur (14) recevant l'eau qui sort du tambour cribleur (16) dans la direction radiale.

4. Installation de gazéification de charbon selon l'une des revendications 1 à 3, caractérisée par plusieurs récipients récepteurs (14) placés les uns derrière les autres.

5. Installation de gazéification de charbon selon la revendication 4, caractérisée en ce que chaque récipient récepteur (14) présente une conduite (27, 28) qui va directement au réacteur.

6. Installation de gazéification de charbon selon la revendication 5, caractérisée en ce que des vannes (25, 26) sont montées sur les conduites (27, 28).

7. Installation de gazéification de charbon selon la revendication 1, caractérisée en ce que le récipient de décantation (1, 29) comporte une conduite d'alimentation (2, 32, 38), une voie d'écoulement d'eau claire (13, 37) et une voie d'écoulement (8, 12, 36) pour l'eau contenant des matières flottables, les deux voies d'écoulement (8, 12, 13, 36, 37) étant séparées l'une de l'autre par une paroi entrant dans l'eau, formée des joues latérales (3, 30) et du fond (4).

8. Installation de gazéification de charbon selon la revendication 7, caractérisée en ce que la voie d'écoulement d'eau claire (13, 37) est un trop-plein.

9. Installation de gazéification de charbon selon la revendication 1, caractérisée en ce que le récipient de décantation comporte une conduite d'alimentation (2, 32, 38) qui débouche au-dessous de la surface de l'eau.

10. Installation de gazéification de charbon selon la revendication 1, caractérisée en ce que l'espace formé par les joues latérales (30) qui comporte la voie d'écoulement (36) est ouvert en bas pour l'évacuation des particules non flottables, et en ce que la voie d'écoulement (36) présente au niveau de la surface du bain une ouverture pour la libre sortie des matiéres flottables.

Fig 1

Fig 2

Fig.3

Fig.4

Fig. 5

Fig. 6

Fig. 7